# EUROPEAN PATENT APPLICATION

(11) **EP 4 693 961 A1**
(43) Date of publication of application: **11.02.2026**
(21) Application number: 23930126.0
(22) Date of filing: 25.12.2023
(51) Int. Cl.: H04B 17/318, H04W 4/80, G07C 9/00, H04W 52/00, B60R 25/24, H04L 67/12

(54) **METHOD, DEVICE, AND SYSTEM FOR OBTAINING CALIBRATION PARAMETER**

(30) Priority: 31.03.2023 CN 202310369469
(71) Applicant: Shenzhen Yinwang Intelligent Technologies Co., Ltd., Shenzhen, Guangdong 518110 (CN)
(72) Inventor: LV, Sen, Shenzhen, Guangdong 518129 (CN); ZHU, Dawei, Shenzhen, Guangdong 518129 (CN); FAN, Yuwei, Shenzhen, Guangdong 518129 (CN); WANG, Wei, Shenzhen, Guangdong 518129 (CN)
(74) Representative: Körber, Martin Hans
(86) International application number: PCT/CN2023/141451
(87) International publication number: WO 2024/198563

(57) **Abstract**

Embodiments of this application provide a calibration parameter obtaining method, an apparatus, and a system. A lock device obtains first information, where the first information includes a grade of a first key device, and the grade indicates a signal transmission capability of the device. The lock device determines a calibration parameter of the first key device based on the first information and a first mapping relationship, where the first mapping relationship includes a mapping relationship between a grade and a calibration parameter, and the calibration parameter of the first key device is used to compensate for a difference between the signal transmission capability of the first key device and a signal transmission capability of a reference key device. In this way, for a plurality of key devices belonging to a same grade, the lock device only needs to store a minimum of one calibration parameter. This can effectively save storage space of the lock device. When there is a new model added for a key device, the lock device needs to obtain only a grade of the new model, to quickly match a calibration parameter. This can improve calibration efficiency and accuracy of the key device, and improve a coverage speed of the key device.

## Description

### CROSS-REFERENCE TO RELATED APPLICATIONS

This application claims priority to Chinese Patent Application No. 202310369469.1, filed with the China National Intellectual Property Administration on March 31, 2023 and entitled "CALIBRATION PARAMETER OBTAINING METHOD, APPARATUS, AND SYSTEM", which is incorporated herein by reference in its entirety.

### TECHNICAL FIELD

This application relates to the field of communication technologies, and in particular, to a calibration parameter obtaining method, an apparatus, and a system.

### BACKGROUND

Currently, more vehicles support a Bluetooth vehicle key function, and a vehicle end detects a signal transmitted by a vehicle key device, so that a Bluetooth keyless unlocking/locking function is implemented. However, there are a large quantity of types of key devices (for example, mobile phones or watches), and signals transmitted by different types of vehicle key devices or even different models of vehicle key devices vary. In this case, a vehicle end cannot cover all devices by using a set of algorithm model parameters. To resolve this problem, the signals need to be calibrated for differences between the different devices. After the calibration, calibration parameters of the corresponding models are generated, so that the Bluetooth keyless unlocking/locking function is ensured to be normal.

In conventional technologies, a calibration parameter of a fixedly supported target model is configured before delivery and launch of a vehicle end. This imposes a high requirement on storage space of the vehicle end. Addition of a new key device model depends on either a version upgrade of an over the air (Over The Air, OTA) technology or an update performed by a user via a cloud application (Application, APP). In this case, calibration parameters are not updated in a timely or accurate manner. This cannot meet an iterative use requirement of the user.

How to improve coverage and accuracy of a vehicle-end calibration parameter and save vehicle-end storage space is a technical problem that needs to be urgently resolved.

### SUMMARY

Embodiments of this application provide a calibration parameter obtaining method, an apparatus, and a system, to improve coverage and accuracy of a vehicle-end calibration parameter, and save vehicle-end storage space.

According to a first aspect, a calibration parameter obtaining method is provided, including: A lock device obtains first information, where the first information includes a grade of a first key device, and the grade indicates a signal transmission capability of the device. The lock device determines a calibration parameter of the first key device based on the first information and a first mapping relationship, where the first mapping relationship includes a mapping relationship between a grade and a calibration parameter, and the calibration parameter of the first key device is used to compensate for a difference between the signal transmission capability of the first key device and a signal transmission capability of a reference key device.

In the foregoing solution, the lock device stores the mapping relationship between the grade and the calibration parameter. In this way, for a plurality of key devices belonging to a same grade, the lock device only needs to store a minimum of one calibration parameter. This can effectively save storage space of the lock device. When there is a new model added for a key device, the lock device needs to obtain only a grade of the new model, to quickly match a calibration parameter. This can improve calibration efficiency and accuracy of the key device, and improve a coverage speed of the key device.

In a possible design, the lock device may query whether the grade of the first key device exists in the first mapping relationship. If the grade of the first key device exists in the first mapping relationship, the lock device determines a calibration parameter corresponding to the grade of the first key device as the calibration parameter of the key device; or if the grade of the first key device does not exist in the first mapping relationship, the lock device determines a calibration parameter of a second key device or a default calibration parameter as the calibration parameter of the first key device, where the second key device is a historical key device, and a model of the second key device is the same as a model of the first key device.

In this way, when the grade of the first key device exists in the first mapping relationship, the calibration parameter of the key device can be quickly determined; or when the grade of the first key device does not exist in the first mapping relationship, an appropriate calibration parameter can be determined for the first key device, to ensure calibration efficiency and reliability, and further ensure normal working of a key function.

In a possible design, the lock device may receive the first information from the first key device, where the first information is obtained by the first key device from a cloud device.

In this way, the first information obtained by the lock device is from the cloud, so that reliability of the first information can be ensured, and reliability of the solution can be improved.

In a possible design, the first information further includes the model of the first key device. Correspondingly, the lock device may generate or update a second mapping relationship based on the model and the calibration parameter of the first key device, where the second mapping relationship includes a mapping relationship between a model and a calibration parameter, and the second mapping relationship is used to implement an unlocking function or a locking function.

In this way, it can be ensured that a key function of the first key device works normally on the lock device.

In a possible design, the lock device may further receive second information from the cloud device, where the second information includes a new grade and/or a new calibration parameter. In this way, the lock device may update the first mapping relationship based on the second information.

In this way, it can be ensured that a grade and/or a calibration parameter stored in the lock device are/is always up-to-date.

In a possible design, the lock device is a vehicle, and the key devices are at least one of a mobile phone, a wearable device, and/or a vehicle key.

Certainly, this is merely an example, and an actual device implementation is not limited thereto.

In a possible design, an operating parameter includes but is not limited to at least one of the following:
a first signal parameter threshold, where the first signal parameter threshold is used to trigger the unlocking function;
the first signal parameter threshold, where the second signal parameter threshold is used to trigger the locking function;
a first time parameter, where the first time parameter is used to control an unlocking time; and
a second time parameter, where the second time parameter is used to determine a locking time.

Certainly, the foregoing several types are merely examples but not limitations.

According to a second aspect, a calibration parameter obtaining method is provided, including: A first key device receives third information from a cloud device, where the third information includes a grade of the first key device, and the grade indicates a signal transmission capability of the device. The first key device sends first information to a lock device, where the first information includes the grade of the first key device, the first information is used by the lock device to determine a calibration parameter of the first key device, and the calibration parameter of the first key device is used to compensate for a difference between the signal transmission capability of the first key device and a signal transmission capability of a reference key device.

In this solution, the first key device may obtain the grade of the first key device from the cloud device, and send the grade of the first key device to the lock device, so that the lock device can quickly determine the calibration parameter of the first key device based on the grade of the first key device, thereby improving calibration efficiency and accuracy of the key device. In addition, from the cloud to the first key device and then to the lock device, only a grade of a newly added key device needs to be transmitted, and an entire set of calibration parameters does not need to be transmitted. Therefore, a data transmission amount is small, and a probability of a data transmission error can be reduced when a communication link between the key device and the cloud device is unstable, thereby helping improve calibration efficiency and accuracy, and saving transmission resources.

In a possible design, before the first key device receives the third information from the cloud device, the first key device may further send a query request to the cloud device, where the query request includes a model of the first key device, and the query request is used to query the grade of the first key device.

In this way, the first key device can query the cloud device for the model of the first key device, thereby ensuring accuracy of the model of the first key device.

In a possible design, the first key device sends the query request to the cloud device after at least one of the following functions of the first key device is enabled: near field communication NFC card swiping, Bluetooth vehicle control, Bluetooth unlocking or Bluetooth locking, and remote vehicle control.

In this way, the first key device can automatically obtain the grade from the cloud without depending on a user trigger, thereby helping improve calibration parameter update efficiency.

In a possible design, the first key device receives second information from the cloud device, where the second information includes a new grade and/or a new calibration parameter. The first key device sends the second information to the lock device.

In this way, a grade and/or a calibration parameter stored in the lock device can be updated.

According to a third aspect, a calibration parameter obtaining method is provided, including: A cloud device receives a query request from a first key device, where the query request includes a model of the first key device, the query request is used to query a grade of the first key device. The cloud device determines the grade of the first key device based on the query request and a third mapping relationship, where the grade indicates a signal transmission capability of the device, and the third mapping relationship includes a mapping relationship between a model and a grade. The cloud device sends third information to the first key device, where the third information includes the grade of the first key device, the grade of the first key device is used to determine a calibration parameter of the first key device, and the calibration parameter of the first key device is used to compensate for a difference between the signal transmission capability of the first key device and a signal transmission capability of a reference key device.

In this solution, the cloud device may send the grade of the first key device to the first key device based on the query request initiated by the first key device, to send, to the lock device for the first key device, a support provided by the grade of the first key device. This helps the lock device quickly determine the calibration parameter of the first key device based on the grade of the first key device, thereby improving calibration efficiency and accuracy of the key device. In addition, from the cloud to the first key device, only a grade of a newly added key device needs to be transmitted, and an entire set of calibration parameters does not need to be transmitted. Therefore, a data transmission amount is small, and a probability of a data transmission error can be reduced when a communication link between the key device and the cloud device is unstable, thereby helping improve calibration efficiency and accuracy, and saving transmission resources.

In a possible design, in the third mapping relationship, any grade corresponds to one or more models.

In a possible design, the third mapping relationship may include a mapping relationship between any two of a model, a grade, an unlocking threshold and/or a locking threshold, and a calibration parameter.

In a possible design, the cloud device obtains second information, where the second information includes a new grade and/or a new calibration parameter. The cloud device sends the second information to the first key device.

In this way, a grade and/or a calibration parameter stored in the lock device can be updated by using the first key device.

According to a fourth aspect, a communication apparatus is provided. The apparatus includes a module, a unit, or a technical means configured to perform the method according to any one of the first aspect or the possible designs of the first aspect.

For example, the apparatus may include:
an interface module, configured to obtain first information, where the first information includes a grade of a first key device, and the grade indicates a signal transmission capability of the device; and
a processing module, configured to determine a calibration parameter of the first key device based on the first information and a first mapping relationship, where the first mapping relationship includes a mapping relationship between a grade and a calibration parameter, and the calibration parameter of the first key device is used to compensate for a difference between the signal transmission capability of the first key device and a signal transmission capability of a reference key device.

In a possible design, the processing module is specifically configured to: query whether the grade of the first key device exists in the first mapping relationship; and if the grade of the first key device exists in the first mapping relationship, determine a calibration parameter corresponding to the grade of the first key device as the calibration parameter of the key device; or if the grade of the first key device does not exist in the first mapping relationship, determine a calibration parameter of a second key device or a default calibration parameter as the calibration parameter of the first key device, where the second key device is a historical key device, and a model of the second key device is the same as a model of the first key device.

In a possible design, the interface module is specifically configured to:
receive the first information from the first key device, where the first information is obtained by the first key device from a cloud device.

In a possible design, the first information further includes the model of the first key device.

The processing module is further configured to generate or update a second mapping relationship based on the model and the calibration parameter of the first key device, where the second mapping relationship includes a mapping relationship between a model and a calibration parameter, and the second mapping relationship is used to implement an unlocking function or a locking function.

In a possible design, the interface module is further configured to receive second information from the cloud device, where the second information includes a new grade and/or a new calibration parameter.

The processing module is further configured to update the first mapping relationship based on the second information.

In a possible design, the communication apparatus is a vehicle, and the key devices are at least one of a mobile phone, a wearable device, and/or a vehicle key.

In a possible design, the operating parameter includes at least one of the following:
a first signal parameter threshold, where the first signal parameter threshold is used to trigger the unlocking function;
the first signal parameter threshold, where the second signal parameter threshold is used to trigger the locking function;
a first time parameter, where the first time parameter is used to control an unlocking time; and
a second time parameter, where the second time parameter is used to determine a locking time.

According to a fifth aspect, a communication apparatus is provided. The apparatus includes a module, a unit, or a technical means configured to perform the method according to any one of the second aspect or the possible designs of the second aspect.

For example, the apparatus may include:
an interface module, configured to receive third information from a cloud device, where the third information includes a grade of a first key device in which the communication apparatus is located, and the grade indicates a signal transmission capability of the device; and
a processing module, configured to generate first information.

The interface module is further configured to send the first information to a lock device, where the first information includes the grade of the first key device, the first information is used by the lock device to determine a calibration parameter of the first key device, and the calibration parameter of the first key device is used to compensate for a difference between the signal transmission capability of the first key device and a signal transmission capability of a reference key device.

In a possible design, the interface module is further configured to: before receiving the third information from the cloud device, send a query request to the cloud device, where the query request includes a model of the first key device in which the communication apparatus is located, and the query request is used to query the grade of the first key device.

In a possible design, the interface module is specifically configured to send the query request to the cloud device after at least one of the following functions of the first key device in which the communication apparatus is located is enabled: near field communication NFC card swiping, Bluetooth vehicle control, Bluetooth unlocking or Bluetooth locking, and remote vehicle control.

In a possible design, the interface module is further configured to: receive second information from the cloud device, where the second information includes a new grade and/or a new calibration parameter; and send the second information to the lock device.

According to a sixth aspect, a communication apparatus is provided. The apparatus includes a module, a unit, or a technical means configured to perform the method according to any one of the third aspect or the possible designs of the third aspect.

For example, the apparatus may include:
an interface module, configured to receive a query request from a first key device, where the query request includes a model of the first key device, the query request is used to query a grade of the first key device, and the grade indicates a signal transmission capability of the device; and
a processing module, configured to determine the grade of the first key device based on the query request and a third mapping relationship, where the third mapping relationship includes a mapping relationship between a model and a grade.

The interface module is further configured to send third information to the first key device, where the third information includes the grade of the first key device, the grade of the first key device is used to determine a calibration parameter of the first key device, and the calibration parameter of the first key device is used to compensate for a difference between the signal transmission capability of the first key device and a signal transmission capability of a reference key device.

In a possible design, in the third mapping relationship, any grade corresponds to one or more models.

In a possible design, the third mapping relationship includes a mapping relationship between any two of a model, a grade, an unlocking threshold and/or a locking threshold, and a calibration parameter.

In a possible design, the interface module is further configured to: obtain second information, where the second information includes a new grade and/or a new calibration parameter; and send the second information to the first key device.

According to a seventh aspect, a communication apparatus is provided, including at least one processor and a memory coupled to the at least one processor. The at least one processor executes instructions stored in the memory, so that the apparatus performs the method according to any one of the first aspect or the possible designs of the first aspect, or performs the method according to any one of the second aspect or the possible designs of the second aspect, or performs the method according to any one of the third aspect or the possible designs of the third aspect.

According to an eighth aspect, a chip is provided. The chip is coupled to a memory, and is configured to read and execute program instructions stored in the memory, so that the method according to any one of the first aspect or the possible designs of the first aspect is performed, or the method according to any one of the second aspect or the possible designs of the second aspect is performed, or the method according to any one of the third aspect or the possible designs of the third aspect is performed.

According to a ninth aspect, a vehicle is provided. The vehicle includes the communication apparatus according to any one of the fourth aspect or the possible designs of the fourth aspect.

According to a tenth aspect, a computer-readable storage medium is provided. The readable storage medium is configured to store instructions, and when the instructions are executed, the method according to any one of the first aspect or the possible designs of the first aspect is implemented, or the method according to any one of the second aspect or the possible designs of the second aspect is implemented, or the method according to any one of the third aspect or the possible designs of the third aspect is implemented.

According to an eleventh aspect, a computer program product is provided. The computer program product stores instructions, and when the instructions are run on a computer, the computer is enabled to perform the method according to any one of the first aspect or the possible designs of the first aspect, the method according to any one of the second aspect or the possible designs of the second aspect, or the method according to any one of the third aspect or the possible designs of the third aspect.

According to a twelfth aspect, a key system is provided, including:
a lock device, configured to perform the method according to any one of the first aspect or the possible designs of the first aspect;
a key device, configured to perform the method according to any one of the second aspect or the possible designs of the second aspect; and
a cloud device, configured to perform the method according to any one of the third aspect or the possible designs of the third aspect.

### BRIEF DESCRIPTION OF DRAWINGS

FIG. 1 is a diagram of an application scenario according to an embodiment of this application;
FIG. 2A and FIG. 2B are diagrams of updating a calibration parameter;
FIG. 3 is a diagram of a key system according to an embodiment of this application;
FIG. 4 is a flowchart of a calibration parameter obtaining method according to an embodiment of this application;
FIG. 5 is a flowchart in which a first key device obtains a grade from a cloud device;
FIG. 6 is an example diagram of updating a calibration parameter;
FIG. 7 is a diagram of a communication apparatus according to an embodiment of this application; and
FIG. 8 is a diagram of another communication apparatus according to an embodiment of this application.

### DESCRIPTION OF EMBODIMENTS

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

The technical solutions provided in embodiments of this application may be applied to any unlocking and/or locking-based scenario. Unlocking may also be referred to as opening, locking may also be referred to as closing, and the like. This is not limited in this application.

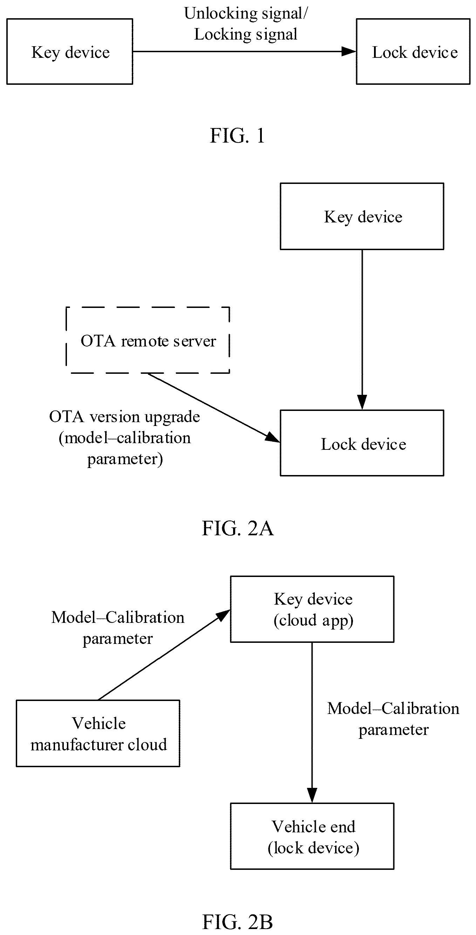

For example, FIG. 1 is a diagram of an application scenario according to an embodiment of this application. The scenario includes a key device and a lock device. The key device may send an unlocking signal, and the lock device may detect the unlocking signal, and determine a distance between the key device and the lock device based on a detection result, to determine whether to unlock based on the distance; and/or, the key device may send a locking signal, and the lock device may detect the locking signal, and determine a distance between the key device and the lock device based on a detection result, to determine whether to lock based on the distance. The unlocking signal and the unlocking signal are wireless signals, for example, Bluetooth signals.

The lock device includes but is not limited to a device that supports an unlocking and/or locking function, such as a car, a bicycle, a door lock, or a password box.

To provide convenience for a user, a same lock device may have a plurality of types of key devices. For example, the lock device is a vehicle. The vehicle end supports a plurality of types of key devices such as a smartphone, a wearable device (such as a smartwatch), and a vehicle key. For a same type of device, the vehicle end supports different models, for example, different mobile phones produced by different mobile phone manufacturers, and different models of mobile phones produced by a same mobile phone manufacturer. The model may also be referred to as a version or another name. This is not limited in this application.

However, communication capabilities of different key devices vary. For example, if signal transmission capabilities vary, the lock device cannot cover all key devices by using a set of algorithm model parameters. In other words, for different key devices, if the lock device uses a same algorithm to control unlocking and/or locking, it cannot be ensured that an unlocking and/or locking function is abnormal and normal.

For example, a mobile phone implements a Bluetooth vehicle key function. A signal transmission capability of a mobile phone 1 is stronger than a signal transmission capability of a mobile phone 2. Unlocking of a vehicle end can be triggered by the mobile phone 1 from a distance of 10 meters away from the vehicle end, and unlocking of the vehicle end can be triggered by the mobile phone 2 from a distance within 2 meters away from the vehicle end.

To resolve this problem, for a difference between different devices, calibration processing needs to be performed on a signal, and a calibration parameter of a corresponding model is generated through the calibration. The calibration parameter is used to compensate for a difference between a signal transmission capability of the first key device and a signal transmission capability of a reference key device. For example, the calibration parameter may be a compensation parameter used to compensate for a difference between an operating parameter of the model and an operating parameter of the reference key device, to ensure an unlocking and/or locking function of the key device to be normal. The reference key device is a key device that is officially configured before delivery of the lock device, and a calibration parameter of each model of a key device is determined based on a difference between the model of the key device and the reference key device.

In some embodiments, a calibration parameter of a fixedly supported target model may be configured before delivery and launch of the vehicle end. However, as more key devices are supported by the vehicle end, this method has an increasingly high requirement on storage space of the vehicle end, and requires high storage costs.

Further, the key device is iteratively updated quickly. When a new model is added to the key device subsequently, a calibration parameter needs to be updated on a lock device side for the new model.

In some embodiments, the vehicle end may update the calibration parameter for the newly added model through a version upgrade of an over-the-air (Over The Air, OTA) technology of the entire vehicle. As shown in FIG. 2A, the vehicle end downloads an upgrade package from an OTA remote server through a wireless network, and updates a calibration parameter during upgrading of a vehicle-end system or an application. However, a period of the OTA version upgrade is long, which cannot meet user requirements for iterative use in a timely manner. As a result, user experience is poor.

In some embodiments, a cloud of a vehicle manufacturer may store and update a model supported by the vehicle end and a calibration parameter corresponding to each model. A user may enter a cloud app installed on a vehicle key device (such as a mobile phone or a watch), manually update the calibration parameter, and then transmit the calibration parameter to the vehicle end through Bluetooth, as shown in FIG. 2B. However, in this method, a user needs to manually enter a cloud app, bringing a problem of untimely update of a calibration parameter. In addition, a data volume of the calibration parameter is large (for example, a vehicle end has a plurality of receiving nodes, and each receiving node has a set of calibration parameters for a key device), and an error is likely to occur in a process of transmitting the calibration parameter from the cloud to the vehicle key device and then to the vehicle end, resulting in low accuracy of the calibration parameter.

To resolve the foregoing one or more technical problems, embodiments of this application provide a key system and a calibration parameter obtaining method. In embodiments of this application, signal transmission capabilities of various key devices are classified into "grades". The grade indicates a signal transmission capability of the device. Each key device corresponds to one grade. The grade of each key device may indicate a signal transmission capability of the key device, or the grade of each key device is related to the signal transmission capability of the key device. Key devices having a same or similar signal transmission capability (that is, key devices with a same calibration parameter) may correspond to a same grade. It may be understood that the grade is merely a possible description manner. In specific application, the grade may be alternatively replaced with another word, for example, a class, a level, a priority, or the like. This is not limited in this application. In this way, for a plurality of key devices belonging to a same grade, the lock device only needs to store a minimum of one calibration parameter. This can effectively save storage space of the lock device. In addition, when there is a new model of a key device, the lock end needs to obtain only a grade of the new model, to quickly reuse a calibration parameter of an existing model at the same grade, thereby improving calibration efficiency and accuracy of the key device.

The following describes the technical solutions of this application in detail.

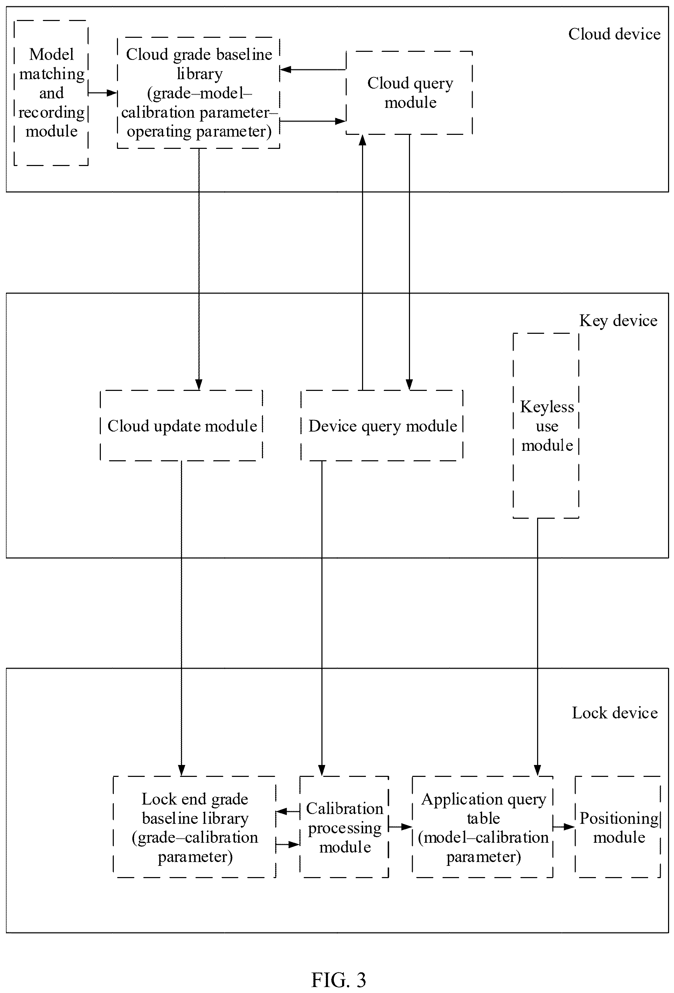

FIG. 3 is a diagram of a key system according to an embodiment of this application. The key system includes a lock device, a key device, and a cloud device.

The cloud device may be a cloud server of a lock device manufacturer, or may be another cloud server (for example, a cloud server of an agent). This is not limited in this application.

The cloud device stores a grade baseline library (a grade baseline library stored in the cloud is referred to as a cloud grade baseline library for short), and the cloud grade baseline library stores a mapping relationship between a model and a grade. Optionally, the cloud grade baseline library may further store other parameters such as a calibration parameter and an operating parameter that correspond to each grade. For example, Table 1 is an example of a cloud grade baseline library.

**Table 1 Cloud grade baseline library**

| Grade | Model | Operating parameter (for example, signal strength) | Calibration parameter |
|---|---|---|---|
| A | N/A | Unlocking threshold: -71 dBm | 0x1122334455 |
| | | Locking threshold: -75 dBm | |
| B | N/A | Unlocking threshold: -73 dBm | 0x2233445566 |
| | | Locking threshold: -77 dBm | |
| C | A1 | Unlocking threshold: -75 dBm | 0x3344556677 |
| | A2 | Locking threshold: -79 dBm | |
| | B1 | | |
| D | A3 | Unlocking threshold: -77 dBm | 0x4455667788 |
| | A7 | Locking threshold: -81 dBm | |
| | B3 | | |
| E | C1 | Unlocking threshold: -79 dBm | 0x5566778899 |
| | D2 | Locking threshold: -83 dBm | |
| | E1 | | |
| F | C2 | Unlocking threshold: -81 dBm | 0x6677889900 |
| | D3 | Locking threshold: -85 dBm | |
| | E4 | | |
| G | A4 | Unlocking threshold: -83 dBm | 0x7788990011 |
| | A5 | Locking threshold: -87 dBm | |
| | F1 | | |
| H | F2 | Unlocking threshold: -85 dBm | 0x8899001122 |
| | T2 | Locking threshold: -89 dBm | |
| | G1 | | |
| I | N/A | Unlocking threshold: -87 dBm | 0x9900112233 |
| | | Locking threshold: -91 dBm | |

The grades for which the models in Table 1 are "N/A" are used for grade expansion of new models to be subsequently added.

In a specific implementation, the lock device manufacturer may collect transmit power signal strength of different key devices, specify signal online and offline strength (including an unlocking threshold and a locking threshold), and then have a classification of different grades (for example, grades A to I shown in Table 1) based on distribution statuses of the collected signals. A grade classification method may be flexibly set. This is not limited in this application.

It may be understood that Table 1 is merely an example but not a limitation. For example, a manner of identifying a grade is not limited to using a letter, and the grade may be further identified by using a number or another manner. For example, the models in Table 1 do not represent actual device models. For example, in addition to the signal strength, the operating parameter may alternatively be another parameter factor, for example, a quantization ratio of a Bluetooth signal level or a Bluetooth signal strength transmit power. For example, in Table 1, an operating parameter of each grade is a set of unlocking/locking thresholds. Actually, there may be a plurality of sets of unlocking/locking thresholds. For example, when there are a plurality of receiving points at a vehicle end, each receiving point corresponds to a set of unlocking/locking thresholds. For example, in Table 1, a higher grade indicates a smaller unlocking/locking threshold, that is, the unlocking/locking threshold corresponding to the grade A is the smallest, and the unlocking/locking threshold corresponding to the grade I is the largest. For example, an actual quantity of grades may be greater than or less than the quantity of grades shown in Table 1.

The cloud device may further include a model matching and recording module, configured to receive input information, and update the cloud grade baseline library based on the input information, for example, a newly added model, grade, or calibration parameter.

The cloud device may further include a cloud query module, configured to: in response to a query request reported by the key device, query, based on a model reported by the key device, the cloud grade baseline library for a grade corresponding to the model, and feed back the grade corresponding to the model to the key device. Optionally, the cloud query module may further feed back, to the key device, another parameter like an operating parameter and a calibration parameter that correspond to the model.

The key device may be any electronic device having a wireless communication capability, for example, may be a vehicle key, a mobile phone, a mobile computer, a tablet computer, a personal digital assistant (personal digital assistant, PDA), a media player, a smart wearable device (like a smartwatch, smart glasses, and a smart band), an e-reader, a handheld game console, or the like.

The key device includes a device querying module, configured to send a query request (the query request carries a model of the key device) to the cloud device, to query the cloud device for a grade corresponding to the model of the key device.

The key device may further include a cloud update module, configured to receive updated information such as model-grade from the cloud device, and deliver the updated information to the lock device, to update a grade baseline library of the lock device (referred to as a lock end grade baseline library for short).

Certainly, the key device may further include another functional module, for example, a keyless use module (configured to implement a Bluetooth keyless unlocking/locking function). This is not shown one by one herein.

The lock device stores a grade baseline library (herein, the grade baseline library at the lock end is referred to as a lock end grade baseline library), and the lock end grade baseline library stores at least a mapping relationship between a grade and a calibration parameter. Optionally, the lock end grade baseline library may further store other parameters such as a model and an operating parameter that correspond to each grade. For example, Table 2 is an example of a lock end grade baseline library.

**Table 2 Lock end grade baseline library**

| Grade | Calibration parameter |
|---|---|
| A | 0x1122334455 |
| B | 0x2233445566 |
| C | 0x3344556677 |
| D | 0x4455667788 |
| E | 0x5566778899 |
| F | 0x6677889900 |
| G | 0x7788990011 |
| H | 0x8899001122 |
| I | 0x9900112233 |

The lock device includes a calibration processing module, and the calibration processing module is configured to perform calibration processing on the key device. For example, the lock device queries the grade baseline library for a calibration parameter of the key device based on the grade of the key device, and then generates or updates an application query table based on the model of the key device and the calibration parameter. The application query table records a mapping relationship between a model and a calibration parameter. For example, Table 3 is an example of an application query table.

**Table 3 Application query table**

| Model | Calibration parameter |
|---|---|
| N/A | 0x1122334455 |
| N/A | 0x2233445566 |
| A1 | 0x3344556677 |
| A2 | |
| B1 | |
| A3 | 0x4455667788 |
| A7 | |
| B3 | |
| C1 | 0x5566778899 |
| D2 | |
| E1 | |
| C2 | 0x6677889900 |
| D3 | |
| E4 | |
| A4 | 0x7788990011 |
| A5 | |
| F1 | |
| F2 | 0x8899001122 |
| T2 | |
| G1 | |
| N/A | 0x9900112233 |

The application query table is used to support another functional module to implement an application function. For example, the lock device further includes a positioning module. The positioning module may query the application query table for a calibration parameter of a current key device based on a model of the current key device, and control an unlocking or locking function based on the calibration parameter, to implement a Bluetooth keyless unlocking/locking function of the key device.

Optionally, the cloud grade baseline library covers the lock end grade baseline library, that is, the cloud grade baseline library has all parameters included in the lock end grade baseline library. In other words, the cloud grade baseline library is more comprehensive than the lock end grade baseline library. Optionally, the cloud grade baseline library is consistent with the lock end grade baseline library. When the cloud grade baseline library changes, the cloud device may synchronously update a changed parameter to the lock device.

It should be understood that FIG. 3 is merely an example. In actual application, functional modules of devices (such as the lock device, the key device, or the cloud device) in the system shown in FIG. 3 may be combined or divided in any manner. This is not specifically limited in this application. In addition, each device may further include more, fewer, or different modules. This is not specifically limited in this application.

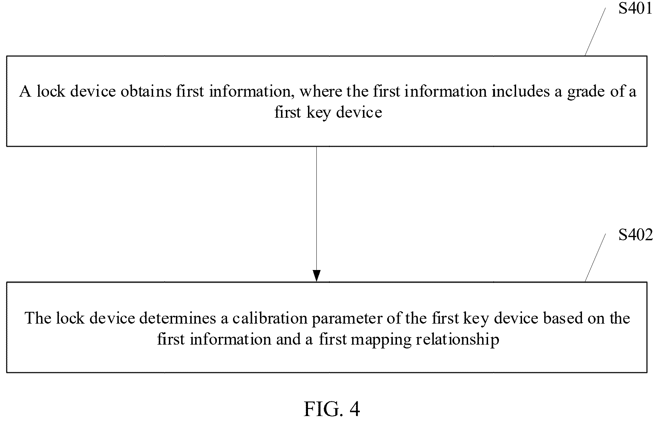

FIG. 4 is a flowchart of a calibration parameter obtaining method according to an embodiment of this application. The method may be applied to the system shown in FIG. 3, and the method includes S401 and S402.

S401: A lock device obtains first information, where the first information includes a grade of a first key device.

For the grade, refer to the foregoing related descriptions. Details are not described herein again.

S402: The lock device determines a calibration parameter of the first key device based on the first information and a first mapping relationship.

The first mapping relationship includes a mapping relationship between a grade and a calibration parameter. For example, the first mapping relationship is a mapping relationship between a grade and a calibration parameter in the lock end grade baseline library shown in Table 2.

In a specific implementation, the lock device may query the first mapping relationship for the grade of the first key device, determine the calibration parameter corresponding to the grade of the first key device, and determine the calibration parameter corresponding to the grade of the first key device as a calibration parameter of a key device. For example, the grade of the first key device is A, and the lock device may determine, by querying Table 2, that the calibration parameter of the first key device is 0x1122334455.

After determining the calibration parameter of the first key device, the lock device may generate or update a second mapping relationship based on the model and the calibration parameter of the first key device. The second mapping relationship includes a mapping relationship between a model and a calibration parameter. The second mapping relationship is used to implement an unlocking function or a locking function. For example, the second mapping relationship is the mapping relationship between the model and the calibration parameter in Table 3.

When subsequently performing a related application function, for example, a Bluetooth unlocking/locking function, the lock device may query the second mapping relationship based on a model of a current key device (for example, the first key device), to determine a calibration parameter of the current key device, and convert an operating parameter of a reference key device into an operating parameter of the first key device based on the calibration parameter of the current key device.

The operating parameter includes but is not limited to at least one of the following:
a first signal parameter threshold, where the first signal parameter threshold is used to trigger the unlocking function;
the first signal parameter threshold, where the second signal parameter threshold is used to trigger the locking function;
a first time parameter, where the first time parameter is used to control an unlocking time; and
a second time parameter, where the second time parameter is used to determine a locking time.

For example, the operating parameter includes an unlocking/locking threshold. When the calibration parameter of the current key device is 0x1122334455, it may be determined that the unlocking threshold is -71 dBm and the locking threshold is -75 dBm. When the key device is close to the lock device, the lock device performs unlocking when detecting that unlocking signal strength is greater than or equal to -71 dB.

It may be understood that the reference key device may also be referred to as a consultation key device or another name. The reference key device is a consultation key device configured to determine a calibration parameter of each key device. In other words, the calibration parameter of each key device represents a difference between an operating parameter of the key device and an operating parameter of the reference key device. The reference key device may be a specific model of a key device, for example, an official key device configured before delivery of a vehicle, or may be a type of key device. For example, a key device corresponding to the grade A is considered as the reference key device. This is not limited in this application.

In the foregoing solution, the lock device stores the mapping relationship between the grade and the calibration parameter (as shown in Table 2). In this way, for a plurality of key devices belonging to a same grade, the lock device only needs to store a minimum of one calibration parameter. This can effectively save storage space of the lock device. When there is a new model added for a key device, the lock device needs to obtain only a grade of the new model, to quickly match a calibration parameter. This can improve calibration efficiency and accuracy of the key device, and improve a coverage speed of the key device.

In some embodiments, if the grade of the first key device does not exist in the first mapping relationship (for example, the grade of the first key device is a newly classified grade, and the grade is not updated in the first mapping relationship in time), the lock device may determine a default calibration parameter as the calibration parameter of the first key device. For example, when the calibration parameter of the lowest grade I is 0x9900112233, 0x9900112233 may be determined as the calibration parameter of the first key device.

Alternatively, the lock device may determine a calibration parameter of a second key device or a default calibration parameter as the calibration parameter of the first key device. The second key device is a historical key device, and a model of the second key device is the same as the model of the first key device. For example, when the calibration parameter of the second key device is 0x8899001122, 0x8899001122 may be used as the calibration parameter of the first key device.

In this way, when the grade of the first key device does not exist in the first mapping relationship, an appropriate calibration parameter can be determined for the first key device, to ensure calibration efficiency and reliability, and further ensure normal working of a key function.

In some embodiments, the first key device may send the first information to the lock device. Correspondingly, that a lock device obtains first information in step S401 may be specifically: S401: The lock device receives the first information from the first key device. Optionally, the first information may further include the model of the first key device. Optionally, before the lock device receives the first information from the first key device, the lock device further sends a request instruction to the first key device, where the request instruction is used to request the grade of the first key device.

It may be understood that, before sending the first information, the first key device needs to first determine the grade of the first key device.

In an implementation, the first key device stores the grade of the first key device, and the first key device reads the grade from the first key device and sends the grade to the lock device.

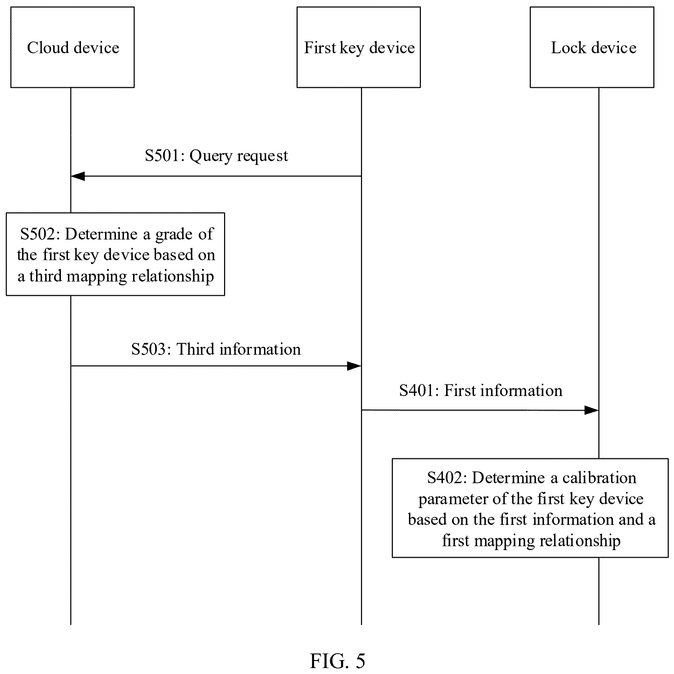

In another implementation, the first key device may obtain the grade from a cloud device. For example, refer to FIG. 5. The flowchart in which the first key device obtains the grade from the cloud device includes the following steps.

S501: The first key device sends a query request to the cloud device, where the query request includes the model of the first key device, and the query request is used to query the grade of the first key device; and the cloud device receives the query request from the first key device.

S502: The cloud device determines the grade of the first key device based on a third mapping relationship in response to the query request.

S503: The cloud device sends third information to the first key device, where the third information includes the grade of the first key device; and the first key device receives the third information from the cloud device, to obtain the grade of the first key device.

The third mapping relationship includes at least a mapping relationship between a model and a grade. Optionally, in the third mapping relationship, any grade corresponds to one or more models. Optionally, the third mapping relationship may include a mapping relationship between any two of a model, a grade, an unlocking threshold and/or a locking threshold, and a calibration parameter. For example, the third mapping relationship may be a cloud grade baseline library, as shown in Table 1.

After S503, the procedure from S401 to S402 is performed.

In this way, when a key device is newly added, from the cloud to the first key device and then to the lock device, only a grade of the newly added key device needs to be transmitted, so that the lock device can determine a calibration parameter of the newly added key device, and an entire set of calibration parameters does not need to be transmitted. Therefore, a data transmission amount is small, and a probability of a data transmission error can be reduced when a communication link between the key device and the cloud device is unstable, thereby helping improve calibration efficiency and accuracy, and saving transmission resources.

In some embodiments, the first key device may send a query request to the cloud device based on a user operation. For example, a cloud app is installed on the first key device, and after a user performs an input operation on the cloud app, the cloud app sends the query request to the cloud device based on the user operation, to obtain the grade of the first key device. In this way, an effect of obtaining a grade of a key device based on a user requirement can be implemented.

In some embodiments, the first key device may send the query request to the cloud device after a Bluetooth-related function is enabled, for example, the first key device sends the query request to the cloud device after at least one of the following functions is enabled: near field communication (Near Field Communication, NFC) card swiping, Bluetooth vehicle control, Bluetooth unlocking or Bluetooth locking, and remote vehicle control. In this way, the first key device can automatically obtain the grade from the cloud without depending on a user trigger, thereby helping improve calibration parameter update efficiency.

In some embodiments, the cloud device may further update the first mapping relationship in the lock device. In specific implementation, if the lock device supports direct communication with the cloud device, the cloud device may directly deliver second information to the lock device. The second information includes a new grade and/or a new calibration parameter. After receiving the second information, the lock device updates the first mapping relationship based on the new grade and/or the new calibration parameter. In this way, update efficiency can be improved. If the lock device does not support direct communication with the cloud device, the cloud device first sends second information to the first key device. The second information includes a new grade and/or a new calibration parameter. Then, the first key device forwards the second information to the lock device. After receiving the second information, the lock device updates the first mapping relationship based on the new grade and/or the new calibration parameter.

For example, the cloud grade baseline library shown in Table 1 and the lock end grade baseline library shown in Table 2 are used as an example. When expansion needs to be performed on a new grade, only the new grade needs to be configured in the cloud grade baseline library, and the cloud device updates the new grade to the lock end grade baseline library by using a cloud update module in the key device. In addition, when a calibration parameter needs to be updated, the cloud device may also update the new calibration parameter to the lock device by using the cloud update module in the key device, so that the lock device can update an application list.

In this way, both the cloud device and the lock device can support expansion and update of the grade and the calibration parameter, so that it can be ensured that the grade and the calibration parameter stored in the lock device are always up-to-date.

In some embodiments, the cloud device may adapt to different cloud grade baseline libraries for different lock devices, and data in the different cloud grade baseline libraries may be mutually reused. The reason is that strength of an unlocking signal and/or a locking signal of the key device detected by the lock device is not only related to a signal transmission capability of the key device, a distance between the key device and the lock device, and the like, but also related to a signal detection capability of the lock device. Therefore, for different lock devices, different deviation adaptation algorithms may be added to the cloud device to cope with differences generated due to different vehicle models. For example, Table 1 is a cloud grade baseline library of a lock device 1, and a signal detection capability of a lock device 2 is stronger than a signal detection capability of the lock device 1. In this case, an unlocking/locking threshold in a cloud grade baseline of the lock device 2 may be lower than an unlocking/locking threshold in the cloud grade baseline of the lock device 1. For example, an unlocking threshold of a grade A in the cloud grade baseline of the lock device 1 is -71 dBm, and a locking threshold is -75 dBm. An unlocking threshold of a grade A in the cloud grade baseline of the lock device 2 is -72 dBm, and a locking threshold is -76 Bm. Certainly, this is merely an example but not a specific limitation.

In this way, the cloud baseline library can be quickly reused to various lock devices, thereby improving coverage efficiency of the lock devices.

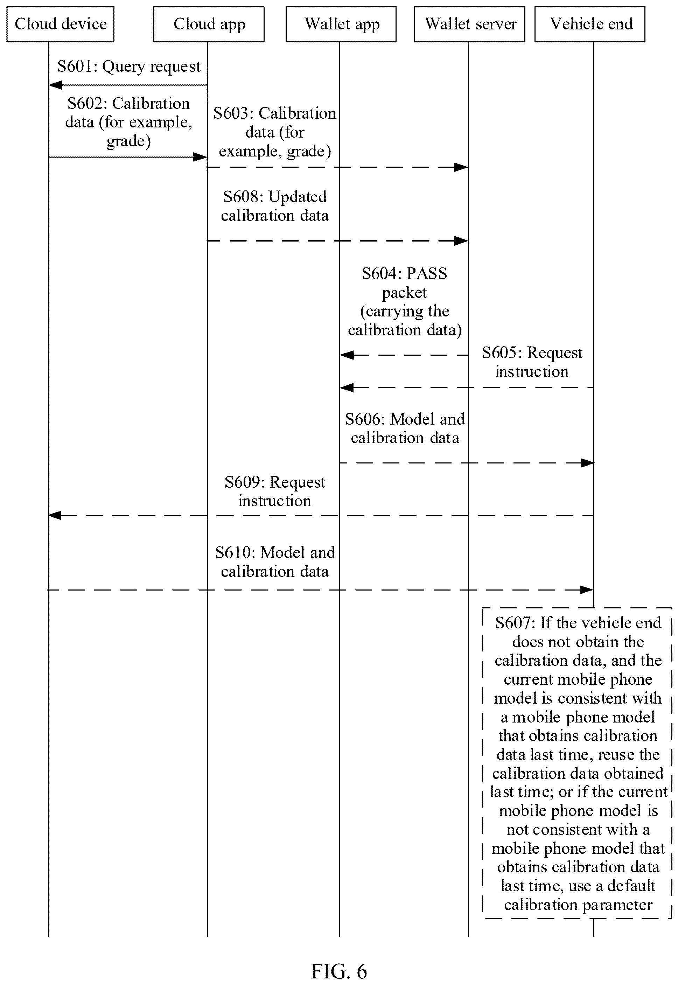

In some embodiments, the first key device may implement a calibration parameter update procedure based on an app. For example, FIG. 6 is an example diagram of a calibration parameter update. In this example, the first key device is a mobile phone of a user, the lock device is a vehicle, and a cloud app and a wallet app are installed on the mobile phone. The method includes the following steps.

S601: The cloud app in the mobile phone sends a query request to the cloud device, where the query request is used to request calibration data of the mobile phone, and the query request carries a model of the first key device.

S602: The cloud device feeds back the calibration data (for example, a grade) of the mobile phone of the user to the cloud app in the mobile phone.

S603: If the user applies to the cloud app for a new vehicle key by using the mobile phone, the cloud app sends the calibration data of the mobile phone to a wallet server.

S604: The wallet server transmits the calibration data of the mobile phone to the wallet app through a PASS packet.

S605: When the mobile phone approaches the vehicle end, the vehicle end sends a request instruction to the wallet app, to request the calibration data of the mobile phone.

S606: The wallet app returns a current model and the calibration data of the mobile phone to the vehicle end.

S607: If the vehicle end does not obtain the calibration data, and the current mobile phone model is consistent with a mobile phone model that obtains calibration data last time, reuse the calibration data obtained last time; or if the current mobile phone model is not consistent with a mobile phone model that obtains calibration data last time, use a default calibration parameter.

Optionally, in S608, after the cloud app sends the calibration data of the mobile phone to the wallet server, if the cloud app finds that there is an update to the calibration data of the mobile phone, the cloud app may send updated calibration data to the wallet server.

It may be understood that the foregoing method steps (for example, the vehicle end obtains the calibration parameter from the cloud by using the wallet app and the wallet server) are merely an example but not a limitation. This is not limited thereto.

For example, the vehicle end may also directly interact with the cloud app. Specifically, for example, after steps S601 and S602, S603 to S606 are not performed, but S609 and S610 are performed.

S609: The vehicle end sends a request instruction to the cloud app, to request the calibration data of the mobile phone.

S610: The cloud app returns a current model and the calibration data of the mobile phone to the vehicle end.

It may be understood that the foregoing designs may be separately implemented, or may be implemented in combination with each other. This is not limited in this application.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes a module/unit/means configured to perform the method performed by the lock device, the first key device, or the cloud device in the foregoing method embodiments. The module/unit/means may be implemented by software, may be implemented by hardware, or may be implemented by hardware executing corresponding software.

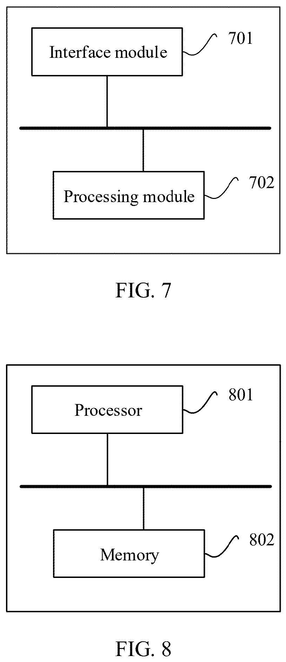

For example, as shown in FIG. 7, the apparatus may include an interface module 701 and a processing module 702.

When the apparatus is the foregoing lock device or is located in the foregoing lock device, the interface module 701 is configured to obtain first information, where the first information includes a grade of a first key device, and the grade indicates a signal transmission capability of the device.

The processing module 702 is configured to determine a calibration parameter of the first key device based on the first information and a first mapping relationship, where the first mapping relationship includes a mapping relationship between a grade and a calibration parameter, and the calibration parameter of the first key device is used to compensate for a difference between the signal transmission capability of the first key device and a signal transmission capability of a reference key device.

When the apparatus is the foregoing lock device or is located in the foregoing first key device, the interface module 701 is configured to receive third information from a cloud device, where the third information includes a grade of the first key device in which the communication apparatus is located, and the grade indicates a signal transmission capability of the device.

The processing module 702 is configured to generate first information.

The interface module 701 is further configured to send the first information to the lock device, where the first information includes the grade of the first key device, the first information is used by the lock device to determine a calibration parameter of the first key device, and the calibration parameter of the first key device is used to compensate for a difference between the signal transmission capability of the first key device and a signal transmission capability of a reference key device.

When the apparatus is the foregoing lock device or is located in the foregoing cloud device, the interface module 701 is configured to receive a query request from a first key device, where the query request includes a model of the first key device, the query request is used to query a grade of the first key device, and the grade indicates a signal transmission capability of the device.

The processing module 702 is configured to determine the grade of the first key device based on the query request and a third mapping relationship, where the third mapping relationship includes a mapping relationship between a model and a grade.

The interface module 701 is further configured to send third information to the first key device, where the third information includes the grade of the first key device, the grade of the first key device is used to determine a calibration parameter of the first key device, and the calibration parameter of the first key device is used to compensate for a difference between the signal transmission capability of the first key device and a signal transmission capability of a reference key device.

It should be understood that all related content of the steps in the foregoing method embodiments may be cited in function descriptions of corresponding functional modules. Details are not described herein again.

In specific implementation, the apparatus may have a plurality of product forms. The following describes several possible product forms.

As shown in FIG. 8, an embodiment of this application further provides a communication apparatus, including a processor 801 and a memory 802. The memory 802 is configured to store computer executable instructions. The processor 801 is configured to execute the computer executable instructions stored in the memory 802, so that the communication apparatus performs the method performed by the lock device, the first key device, or the cloud device in the foregoing method embodiments.

It should be understood that the processor mentioned in embodiments of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the lock device, the first key device, or the cloud device is performed.

Based on a same technical concept, an embodiment of this application further provides a computer program product including instructions. The computer program product stores the instructions, and when the instructions are run on a computer, the method performed by the lock device, the first key device, or the cloud device is performed.

Based on a same technical concept, an embodiment of this application further provides a terminal device, including the lock device described above. The terminal device may be a vehicle, an uncrewed aerial vehicle, a helicopter, an airplane, a ship, an intelligent transportation device, a smart home device, or the like. A specific form of the terminal device is not limited in embodiments of this application.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A calibration parameter obtaining method, comprising:
obtaining, by a lock device, first information, wherein the first information comprises a grade of a first key device, and the grade indicates a signal transmission capability of the device; and
determining, by the lock device, a calibration parameter of the first key device based on the first information and a first mapping relationship, wherein the first mapping relationship comprises a mapping relationship between a grade and a calibration parameter, and the calibration parameter of the first key device is used to compensate for a difference between the signal transmission capability of the first key device and a signal transmission capability of a reference key device.

2. The method according to claim 1, wherein the determining, by the lock device, a calibration parameter of the first key device based on the first information and a first mapping relationship comprises:
querying, by the lock device, whether the grade of the first key device exists in the first mapping relationship; and
if the grade of the first key device exists in the first mapping relationship, determining, by the lock device, a calibration parameter corresponding to the grade of the first key device as the calibration parameter of the key device; or
if the grade of the first key device does not exist in the first mapping relationship, determining, by the lock device, a calibration parameter of a second key device or a default calibration parameter as the calibration parameter of the first key device, wherein the second key device is a historical key device, and a model of the second key device is the same as a model of the first key device.

3. The method according to claim 1 or 2, wherein the obtaining, by a lock device, first information comprises:
receiving, by the lock device, the first information from the first key device, wherein the first information is obtained by the first key device from a cloud device.

4. The method according to any one of claims 1 to 3, wherein the first information further comprises the model of the first key device; and
the method further comprises:
generating or updating, by the lock device, a second mapping relationship based on the model and the calibration parameter of the first key device, wherein the second mapping relationship comprises a mapping relationship between a model and a calibration parameter, and the second mapping relationship is used to implement an unlocking function or a locking function.

5. The method according to any one of claims 1 to 4, further comprising:
receiving, by the lock device, second information from the cloud device, wherein the second information comprises a new grade and/or a new calibration parameter; and
updating, by the lock device, the first mapping relationship based on the second information.

6. The method according to any one of claims 1 to 5, wherein the lock device is a vehicle, and the key devices are at least one of a mobile phone, a wearable device, and/or a vehicle key.

7. The method according to any one of claims 1 to 6, wherein the operating parameter comprises at least one of the following:
a first signal parameter threshold, wherein the first signal parameter threshold is used to trigger the unlocking function;
the first signal parameter threshold, wherein the second signal parameter threshold is used to trigger the locking function;
a first time parameter, wherein the first time parameter is used to control an unlocking time;
and
a second time parameter, wherein the second time parameter is used to determine a locking time.

8. A calibration parameter obtaining method, comprising:
receiving, by a first key device, third information from a cloud device, wherein the third information comprises a grade of the first key device, and the grade indicates a signal transmission capability of the device; and
sending, by the first key device, first information to a lock device, wherein the first information comprises the grade of the first key device, the first information is used by the lock device to determine a calibration parameter of the first key device, and the calibration parameter of the first key device is used to compensate for a difference between the signal transmission capability of the first key device and a signal transmission capability of a reference key device.

9. The method according to claim 8, wherein before the receiving, by a first key device, third information from a cloud device, the method further comprises:
sending, by the first key device, a query request to the cloud device, wherein the query request comprises a model of the first key device, and the query request is used to query the grade of the first key device.

10. The method according to claim 9, wherein the sending, by the first key device, a query request to the cloud device comprises:
sending, by the first key device, the query request to the cloud device after at least one of the following functions of the first key device is enabled: near field communication NFC card swiping, Bluetooth vehicle control, Bluetooth unlocking or Bluetooth locking, and remote vehicle control.

11. The method according to any one of claims 8 to 10, wherein
receiving, by the first key device, second information from the cloud device, wherein the second information comprises a new grade and/or a new calibration parameter; and
sending, by the first key device, the second information to the lock device.

12. A calibration parameter obtaining method, comprising:
receiving, by a cloud device, a query request from a first key device, wherein the query request comprises a model of the first key device, the query request is used to query a grade of the first key device, and the grade indicates a signal transmission capability of the device;
determining, by the cloud device, the grade of the first key device based on the query request and a third mapping relationship, wherein the third mapping relationship comprises a mapping relationship between a model and a grade; and
sending, by the cloud device, third information to the first key device, wherein the third information comprises the grade of the first key device, the grade of the first key device is used to determine a calibration parameter of the first key device, and the calibration parameter of the first key device is used to compensate for a difference between the signal transmission capability of the first key device and a signal transmission capability of a reference key device.

13. The method according to claim 12, wherein in the third mapping relationship, any grade corresponds to one or more models.

14. The method according to claim 12 or 13, wherein the third mapping relationship comprises a mapping relationship between any two of a model, a grade, an unlocking threshold and/or a locking threshold, and a calibration parameter.

15. The method according to any one of claims 12 to 14, further comprising:
obtaining, by the cloud device, second information, wherein the second information comprises a new grade and/or a new calibration parameter; and
sending, by the cloud device, the second information to the first key device.

16. A communication apparatus, comprising:
an interface module, configured to obtain first information, wherein the first information comprises a grade of a first key device, and the grade indicates a signal transmission capability of the device; and
a processing module, configured to determine a calibration parameter of the first key device based on the first information and a first mapping relationship, wherein the first mapping relationship comprises a mapping relationship between a grade and a calibration parameter, and the calibration parameter of the first key device is used to compensate for a difference between the signal transmission capability of the first key device and a signal transmission capability of a reference key device.

17. A communication apparatus, comprising:
an interface module, configured to receive third information from a cloud device, wherein the third information comprises a grade of a first key device in which the communication apparatus is located, and the grade indicates a signal transmission capability of the device;
a processing module, configured to generate first information; and
the interface module, further configured to send the first information to a lock device, wherein the first information comprises the grade of the first key device, the first information is used by the lock device to determine a calibration parameter of the first key device, and the calibration parameter of the first key device is used to compensate for a difference between the signal transmission capability of the first key device and a signal transmission capability of a reference key device.

18. A communication apparatus, comprising:
an interface module, configured to receive a query request from a first key device, wherein the query request comprises a model of the first key device, the query request is used to query a grade of the first key device, and the grade indicates a signal transmission capability of the device; and
a processing module, configured to determine the grade of the first key device based on the query request and a third mapping relationship, wherein the third mapping relationship comprises a mapping relationship between a model and a grade, wherein
the interface module is further configured to send third information to the first key device, wherein the third information comprises the grade of the first key device, the grade of the first key device is used to determine a calibration parameter of the first key device, and the calibration parameter of the first key device is used to compensate for a difference between the signal transmission capability of the first key device and a signal transmission capability of a reference key device.

19. A communication apparatus, comprising at least one processor and a memory coupled to the at least one processor, wherein the at least one processor executes instructions stored in the memory, so that the apparatus performs the method according to any one of claims 1 to 7, or performs the method according to any one of claims 8 to 11, or performs the method according to any one of claims 12 to 15.

20. A vehicle, wherein the vehicle comprises the communication apparatus according to claim 16.

21. A computer-readable storage medium, wherein the readable storage medium is configured to store instructions, and when the instructions are executed, the method according to any one of claims 1 to 7 is implemented, or the method according to any one of claims 8 to 11 is implemented, or the method according to any one of claims 12 to 15 is implemented.

22. A key system, comprising:
a lock device, configured to perform the method according to any one of claims 1 to 7;
a key device, configured to perform the method according to any one of claims 8 to 11; and
a cloud device, configured to perform the method according to any one of claims 12 to 15.

23. A computer program product, wherein the computer program product stores instructions, and when the instructions are run on a computer, the computer is enabled to perform the method according to any one of claims 1 to 7, the method according to any one of claims 8 to 11, or the method according to any one of claims 12 to 15.
